# EUROPEAN PATENT APPLICATION

(11) **EP 2 163 745 A1**
(43) Date of publication of application: **17.03.2010**
(21) Application number: 09170380.1
(22) Date of filing: 16.09.2009
(51) Int. Cl.: F01P 11/20, F28D 20/00

(54) **Heat accumulator and manufacturing method thereof**

(30) Priority: 16.09.2008 JP 2008236208
(71) Applicant: Calsonic Kansei Corporation, Saitama-shi Saitama 331-8501 (JP); Zojirushi Corporation, Osaka-shi Osaka 530-8511 (JP)
(72) Inventor: Hori, Ryoichi, Saitama-shi Saitama 331-8501 (JP); Nakajima, Shirou, Saitama-shi Saitama 331-8501 (JP); Kobayashi, Hideki, Saitama-shi Saitama 331-8501 (JP); Takada, Yousuke, Saitama-shi Saitama 331-8501 (JP); Tamagawa, Satoshi, Saitama-shi Saitama 331-8501 (JP); Higashino, Takashi, Osaka-shi Osaka 530-8511 (JP); Kanno, Takeo, Osaka-shi Osaka 530-8511 (JP); Takatsuki, Toyohiko, Osaka-shi Osaka 530-8511 (JP)
(74) Representative: Grünecker, Kinkeldey, Stockmair & Schwanhäusser Anwaltssozietät

(57) **Abstract**

A flow distribution portion is provided between a medium introduction portion and a medium discharge portion to make a flow of an introduced medium substantially even in a diametrical direction of a storage portion. The storage portion includes a restricting member that restricts movement of the flow distribution portion in a flow direction of the medium. A predetermined interval is provided between the flow distribution portion and an inner wall of the storage portion.

## Description

### FIELD OF THE INVENTION

This invention relates to a heat accumulator that stores a medium for promoting warm-up of an engine or the like, and a manufacturing method thereof.

### BACKGROUND OF THE INVENTION

It is known that by promoting warm-up of an engine installed in a vehicle, fuel efficiency can be improved and emissions of exhaust gas and the like can be reduced. Meanwhile, when a long period of time elapses after the engine is stopped, a temperature on the periphery of the engine, including a cooling water temperature, decreases. When the engine is restarted in this state, a specific heat capacity of the cooling water is large, and therefore a certain amount of time is required to complete warm-up.

In a known technique for promoting warm-up of an engine, which has been proposed in response to this problem, a heat accumulator that has a thermal insulation structure and stores hot water warmed during an operation of the engine is provided, and the hot water stored in the heat accumulator is used during engine startup.

This type of heat accumulator is provided with a distribution plate (partition wall) to prevent inflowing liquid and stored liquid from intermixing when a temperature difference between the two is large. The partition wall includes a large number of holes through which the liquid flows so that the high-temperature liquid can be discharged without intermixing with the low-temperature fluid (JP2004-154338A, JP2004-173897A, JP2004-224153A).

### SUMMARY OF THE INVENTION

In a conventional heat accumulator, the partition wall functioning as a flow distribution portion is fixed to an inner side of a heat storage tank by welding.

However, in a case where a component is fixed by welding, if a minute gap is formed on the periphery of the welded portion, particularly in a site where the medium is stored in the interior of the heat storage tank, the medium may stagnate in the gap, leading to crevice corrosion. As a result, the heat storage tank itself may corrode, causing water leakage and loss of a heat retention function due to loss of the vacuum of the tank.

This invention has been designed in consideration of this problem, and it is an object thereof to provide a heat accumulator in which problems such as water leakage and loss of a heat retention function due to structurally related corrosion or the like can be prevented without incurring an increase in manufacturing cost.

According to an aspect of this invention, a heat accumulator includes: a storage portion that has a thermal insulation structure and stores a medium in an interior thereof; a medium inlet portion having a medium introduction portion that introduces the medium into the interior of the storage portion; a medium outlet portion having a medium discharge portion that discharges the medium from the interior of the storage portion; and a flow distribution portion that is provided between the medium introduction portion and the medium discharge portion and makes a flow of the introduced medium substantially even in a diametrical direction of the storage portion, wherein the storage portion comprises a restricting member that restricts movement of the flow distribution portion in a flow direction of the medium, and a predetermined interval is provided between the flow distribution portion and an inner wall of the storage portion.

According to an aspect of this invention, movement of the flow distribution portion that makes the flow of the introduced medium substantially even in the diametrical direction of the storage portion is restricted by the restricting member while maintaining the predetermined interval between the flow distribution portion and the inner wall of the storage portion. Therefore, minute gaps are not formed between the flow distribution portion and the inner wall of the storage portion, and as a result, problems caused by crevice corrosion can be prevented.

### BRIEF DESCRIPTION OF THE DRAWINGS

FIG. 1 is an illustrative view of a heat accumulator according to a first embodiment of this invention.

FIG. 2 is a sectional view showing the main parts of another example of the heat accumulator according to the first embodiment of this invention.

FIG. 3 is a sectional view showing the main parts of a further example of the heat accumulator according to the first embodiment of this invention.

FIG. 4 is a sectional view showing the main parts of a further example of the heat accumulator according to the first embodiment of this invention.

FIG. 5 is an illustrative view of a heat accumulator according to a second embodiment of this invention.

### DETAILED DESCRIPTION OF THE PREFERRED EMBODIMENTS

Embodiments of this invention will be described below with reference to the figures.

First Embodiment

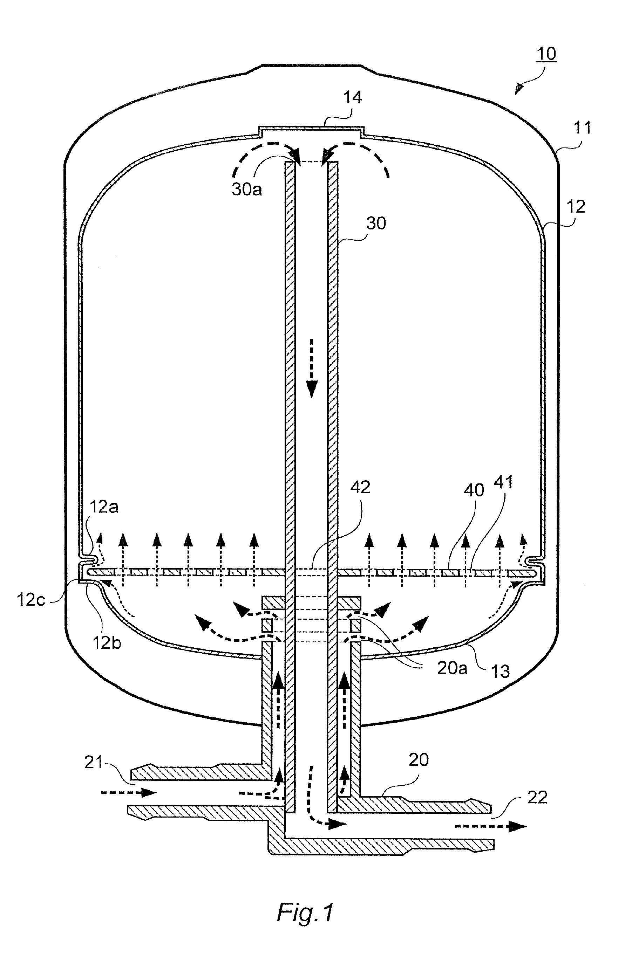

FIG. 1 is a perspective sectional view of a heat accumulator 10 according to a first embodiment.

The heat accumulator 10 is a tank storing a liquid medium.

The heat accumulator 10 is constituted by an inside tank 12 formed in a bottle shape to be capable of storing a medium such as cooling water in its interior, and an outside tank 11 that surrounds the inside tank 12 and is separated from the inside tank 12 by a predetermined space. The predetermined space between the outside tank 11 and the inside tank 12 is substantially a vacuum, and therefore the heat accumulator 10 is shielded from outside air such that the medium stored in the interior thereof is kept warm.

The outside tank 11 and inside tank 12 are preferably formed from a highly corrosion resistant metallic material such as stainless steel, for example SUS304 or the like.

The heat accumulator 10 comprises an inlet pipe 20 serving as a medium inlet portion through which the medium flows into the interior of the heat accumulator 10, and an outlet pipe 30 serving as a medium outlet portion through which the stored medium is discharged from the heat accumulator 10. The inlet pipe 20 and outlet pipe 30 are formed from a resin material, for example.

The inlet pipe 20 is provided on a bottom side of the heat accumulator 10. The inlet pipe 20 includes an inlet hole 21 and an outlet hole 22. The inlet hole 21 and outlet hole 22 are connected to a cooling water system of a vehicle, not shown in the figure, and cooling water serving as the medium passes therethrough.

The inlet pipe 20 has a double tube structure in which an outer side of the double tube structure communicates with the inlet hole 21 and a slit portion 20a opening to the interior of the heat accumulator 10, and an inner side of the double tube structure communicates with the outlet pipe 30 and the outlet hole 22.

The medium flows in through the inlet hole 21, reaches the slit portion 20a through the outer side of the double tube structure of the inlet pipe 20, and then flows into the interior of the heat accumulator 10 through the slit portion 20a. Further, the medium in the interior of the heat accumulator 10 passes through the interior of the outlet pipe 30 from an opening portion 30a opened in an upper side of the outlet pipe 30, and is discharged through the outlet hole 22 provided in the inlet pipe 20.

In other words, the slit portion 20a constitutes a medium introduction portion for introducing the medium into the interior of the heat accumulator 10, and the opening portion 30a constitutes a medium discharge portion for discharging the medium from the interior of the heat accumulator 10.

In the inside tank 12, a projecting portion 14 that projects slightly upward is formed above the outlet pipe 30. The projecting portion 14 is provided to store gas such as air contained in the medium temporarily such that the stored gas is discharged together with the outflowing medium.

A thin plate-shaped flow distribution plate 40 is provided in the interior of the heat accumulator 10.

The flow distribution plate 40 is provided between the slit portion 20a of the inlet pipe 20 and the opening portion 30a of the outlet pipe 30.

More specifically, the flow distribution plate 40 divides the inside tank 12 of the heat accumulator 10 into an upper side and a bottom side. A large number of flow holes 41 that allow inflowing medium from the bottom side to flow to the upper side are provided in a surface of the flow distribution plate 40.

By means of the flow holes 41, the flow of the medium introduced through the inlet pipe 20 is distributed substantially evenly through the interior of the heat accumulator 10 in a diametrical direction. Thus, a situation in which a part of the introduced medium takes a short cut along the shortest route from the inlet pipe 20 to the outlet pipe 30 is prevented. In other words, the flow distribution plate 40 constitutes a flow distribution portion for distributing the flow of the medium.

For example, when high-temperature medium is stored in the interior of the heat accumulator 10 and low-temperature medium flows in through the inlet pipe 20, the low-temperature medium is prevented from flowing out through the outlet pipe 30 by the flow distribution plate 40, and instead, the high-temperature medium in the interior of the heat accumulator 10 is discharged preferentially. The low-temperature medium distributed evenly by the flow distribution plate 40 accumulates gradually on the upper side of the interior of the heat accumulator 10 from the inlet pipe 20 such that when eventually almost all of the high-temperature medium has been discharged, the low-temperature medium fills the interior of the heat accumulator 10. With this constitution, the heat storage efficiency of the heat accumulator 10 can be improved.

As will be described below, movement of the flow distribution plate 40 in an upper side direction and a bottom side direction is restricted by a first restricting portion 12a formed on an inner wall of the inside tank 12 and a second restricting portion 12b formed on an inner wall of the bottom side of the inside tank 12. Further, movement of the flow distribution plate 40 in the diametrical direction is restricted by providing a through hole 42 penetrated by the outlet pipe 30 substantially in the center thereof.

Conventionally, the flow distribution plate 40 is joined to the inside tank 12 of the heat accumulator 10 by welding or the like. However, when a thin plate-shaped structure is joined directly to the inner wall of the inside tank 12 constituting the storage portion, minute gaps are formed in the vicinity of the joint portion.

Crevice corrosion may occur in these minute gaps due to stagnation of the medium. As a result of this corrosion, pin holes or the like may form in the inside tank 12, leading to problems such as water leakage and loss of a heat retention function due to loss of the vacuum between the outside tank 11 and the inside tank 12.

In the first embodiment, corrosion of the inside tank 12 is prevented using a constitution described below.

As shown in FIG. 1, in the heat accumulator 10 according to the first embodiment, an annular rib (the first restricting portion 12a) is formed on the inner side of the inside tank 12. The first restricting portion 12a is constituted by a projection having a predetermined height that projects toward the inner side of the inside tank 12 around the entire circumference of the inside tank 12. The first restricting portion 12a is formed by drawing, for example.

The first restricting portion 12a is fashioned such that an inner diameter thereof is smaller than an outer diameter of the flow distribution plate 40 inserted into the interior of the inside tank 12. The first restricting portion 12a restricts movement of the flow distribution plate 40 in the upper side direction.

Further, a lid portion 13 is joined to the bottom side of the inside tank 12. The annular second restricting portion 12b is formed around the entire circumference of the lid portion 13 similarly to the first restricting portion 12a. The second restricting portion 12b restricts movement of the flow distribution plate 40 in the bottom side direction.

The first restricting portion 12a and second restricting portion 12b are provided at a predetermined interval, and this predetermined interval is set to be larger than a thickness of the flow distribution plate 40. Accordingly, the flow distribution plate 40 is disposed at a predetermined remove from both the first restricting portion 12a and the second restricting portion 12b.

The lid portion 13 is joined to the inside tank 12 by performing welding on a joint portion 12c. As a result, the lid portion 13 is integrated with the inside tank 12 so that the medium can be stored in the interior of the inside tank 12.

The through hole 42 penetrated by the outlet pipe 30 is formed in the center of the flow distribution plate 40. The through hole 42 is shaped such that a diameter thereof corresponds to an outer diameter of the outlet pipe 30. When the outlet pipe 30 is inserted into the interior of the heat accumulator 10, the flow distribution plate 40 is fixed in the interior of the heat accumulator 10 in the diametrical direction by the outlet pipe 30 and the through hole 42. At this time, an outer periphery of the flow distribution plate 40 is disposed at a predetermined remove from an outer wall of the inside tank 12.

By means of this structure, the flow distribution plate 40 is held in a movement-restricted state in a predetermined position in the interior of the inside tank 12 while maintaining a constant interval from the inner wall of the inside tank 12.

It should be noted that when the interior of the heat accumulator 10 is not filled with the medium, the flow distribution plate 40 contacts the second restricting portion 12b on the bottom side due to gravity, but when the interior of the heat accumulator 10 is filled with the medium and the medium circulates, the medium passes from the inlet pipe 20 side to the outlet pipe 30 side through the interval between the flow distribution plate 40 and the inside tank 12 as well as the flow holes 41.

When the medium flows in this manner, the flow distribution plate 40 floats in a predetermined position in the interior of the heat accumulator 10 without contacting the inner wall of the inside tank 12, the first restricting portion 12a, and the second restricting portion 12b.

A material that is electrically more basic than the material of the inside tank 12 is preferably used for the flow distribution plate 40. For example, when the inside tank 12 is formed from stainless steel, aluminum or the like, which has higher electronegativity, is used as the material for the flow distribution plate 40. With this constitution, the flow distribution plate 40 is caused to function as a sacrificial member so that the periphery of the inside tank 12 in the vicinity of the flow distribution plate 40 can be prevented from corroding by a sacrificial protection.

When strength is required in the flow distribution plate 40, a material obtained by implementing plating processing on sheet steel using aluminum, zinc, or the like may be used as the material of the flow distribution plate 40 instead of aluminum. In this case, the surface of this material may be caused to function as a sacrificial member.

In the first embodiment, there is no need to join the inside tank 12 to the flow distribution plate 40 by welding or the like. Hence, the inside tank 12 and flow distribution plate 40 may be formed from different materials or subjected to different types of surface processing.

By fixing the flow distribution plate 40 to the inside tank 12 constituting the heat accumulator 10 while maintaining a predetermined interval between the two, minute gaps formed by joining such as welding can be eliminated, and as a result, crevice corrosion can be prevented. Further, since a processing operation to fix the flow distribution plate 40 is unnecessary, a reduction in manufacturing cost can be achieved.

Next, a method of manufacturing the heat accumulator 10 will be described.

As described above, the heat accumulator 10 is constituted by the outside tank 11, the inside tank 12, the inlet pipe 20, and the outlet pipe 30.

First, the bowl-shaped inside tank 12 is prepared with the bottom side unformed. The annular first restricting portion 12a is then formed in the required location of the inside tank 12 (first step).

Next, the flow distribution plate 40 formed in advance with the flow holes 41 and so on is inserted into the inside tank 12 (second step).

Next, the lid portion 13 is joined to the bottom side of the inside tank 12 by means such as welding. The second restricting portion 12b is formed on the lid portion 13 in advance in the manner described above (third step).

Next, the outside tank 11 is formed.

The outside tank 11 is prepared similarly to the inside tank 12, i.e. with the bottom side unformed, for example. The inside tank 12 is then inserted into the outside tank 11, whereupon the bottom side of the outside tank 11 is formed.

The bottom side of the outside tank 11 is partially joined to the lid portion 13 of the inside tank 12. As a result, an airtight space is formed between the outside tank 11 and the inside tank 12.

Air is then suctioned from the interior by a pump or the like so that the space between the outside tank 11 and the inside tank 12 is substantially a vacuum. At this time, for example, a valve may be provided in advance on the outside tank 11, and the valve may be closed when suction by the pump is complete (fourth step).

Next, the inlet pipe 20 and outlet pipe 30 are inserted into an opening part on the bottom side of the heat accumulator 10. At this time, the outlet pipe 30 penetrates the through hole 42 in the flow distribution plate 40, whereby the flow distribution plate 40 is positioned in the diametrical direction (fifth step).

Through the steps described above, the heat accumulator 10 is manufactured.

It should be noted that the joint between the inside tank 12 and the lid portion 13 is not limited to the shape described above, and may take various shapes.

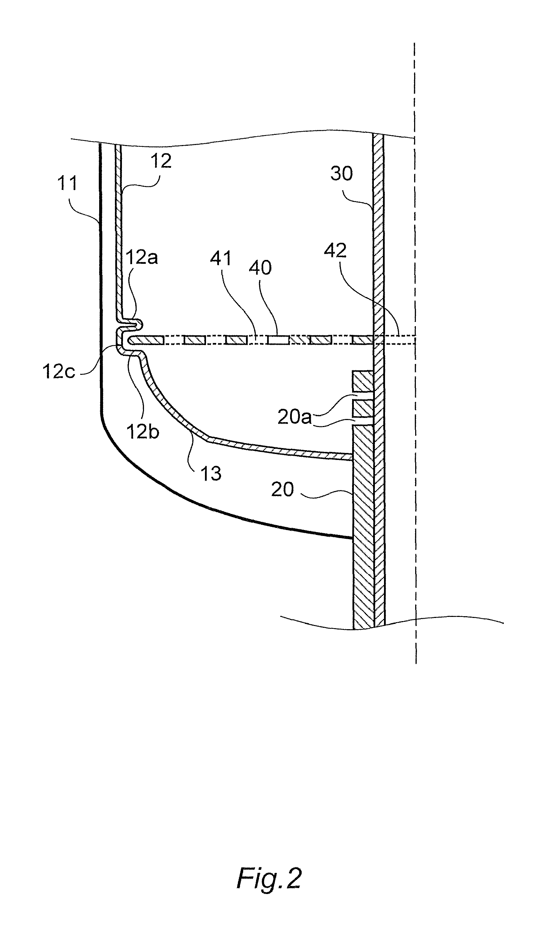

FIG. 2 is a sectional view showing the main parts of another example of the heat accumulator 10 according to the first embodiment.

In the example described with reference to FIG. 1, the inside tank 12 and lid portion 13 are welded at a corner portion. In the example shown in FIG. 2, on the other hand, a joint is formed by so-called butt welding, in which an end surface of the opening portion of the inside tank 12 and an end surface of the lid portion 13 are joined linearly.

With this constitution, minute gaps can be prevented from forming in the interior of the inside tank 12. Further, an improvement can be achieved in the shape freedom of the inside tank 12.

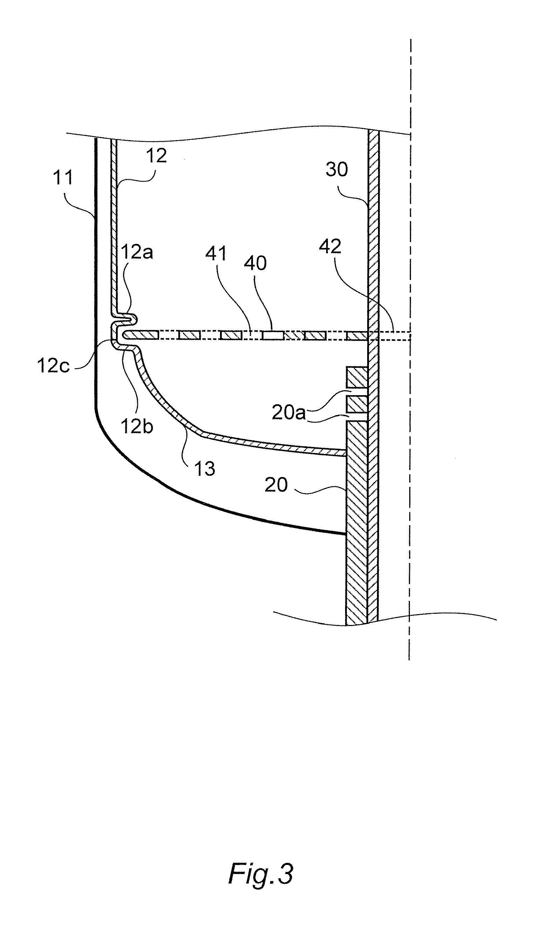

FIG. 3 is a sectional view showing the main parts of a further example of the heat accumulator 10 according to the first embodiment.

In the example shown in FIG. 3, the first restricting portion 12a and the second restricting portion 12b are shaped substantially identically. With this shape, the position of the second restricting portion 12b is not limited to the position of the joint with the lid portion 13, and therefore improvements in the freedom of the disposal position of the flow distribution plate 40 and the shape of the inside tank 12 are achieved.

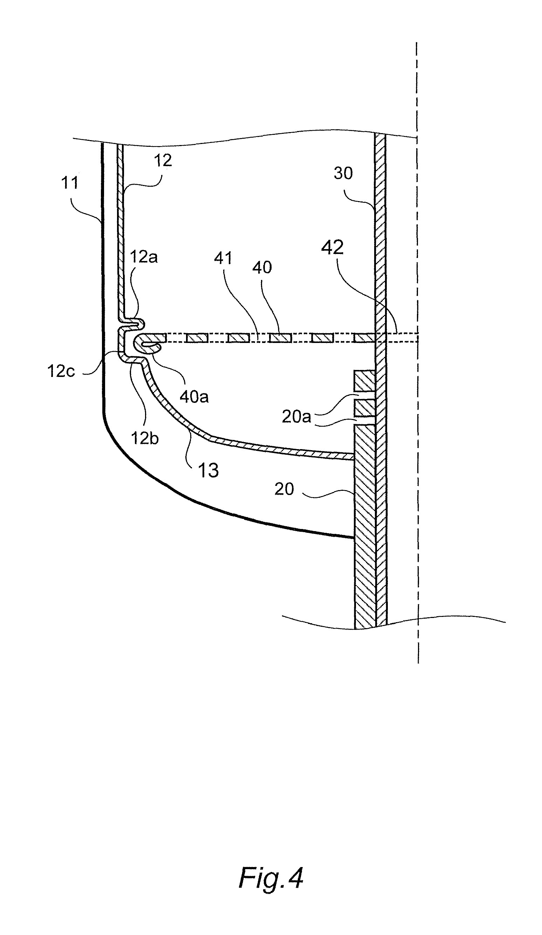

FIG. 4 is a sectional view showing the main parts of a further example of the heat accumulator 10 according to the first embodiment.

In the example shown in FIG. 4, an outer edge of the flow distribution plate 40 is formed to bend inward.

Although diametrical direction movement of the flow distribution plate 40 is restricted by the outlet pipe 30, the flow distribution plate 40 is disposed to be capable of moving between the first restricting portion 12a and the second restricting portion 12b. Therefore, depending on the flow of the medium through the interior of the heat accumulator 10, the flow distribution plate 40 may contact the first restricting portion 12a or the second restricting portion 12b. The first restricting portion 12a or second restricting portion 12b may be damaged by this contact, leading to a reduction in the durability of the inside tank 12.

Hence, a bent portion 40a is formed by bending the outer edge of the flow distribution plate 40 such that the outer edge of the flow distribution plate 40 in a circumferential direction has a curved surface relative to the inside tank 12. By forming a curved surface on the part of the flow distribution plate 40 in the vicinity of the first restricting portion 12a and second restricting portion 12b in this manner, the flow distribution plate 40 does not come into edge contact with the inside tank 12, and therefore a reduction in the durability of the inside tank 12 can be prevented.

In the heat accumulator 10 according to the first embodiment, constituted as described above, the flow distribution plate 40 is provided in the inside tank 12, which serves as a medium storage portion in the interior of the heat accumulator 10, to prevent a reduction in heat retention efficiency occurring when the inflowing medium and the stored medium intermix directly. The flow distribution plate 40 is provided at a predetermined remove from the inside tank 12. Hence, the inside tank 12 and the flow distribution plate 40 are not joined directly by welding or the like, and therefore crevice corrosion caused by minute gaps formed in the joint can be prevented. As a result, water leakage and deterioration of a thermal insulation effect due to vacuum loss can be prevented.

Vertical direction movement of the flow distribution plate 40 is restricted by the first restricting portion 12a and second restricting portion 12b formed on the inside tank 12, and therefore the flow distribution plate 40 can be fixed to the interior of the heat accumulator 10 by a simple constitution and without being joined.

Further, the first restricting portion 12a and second restricting portion 12b are provided in the joint part of the lid portion 13 that is joined by welding or the like during formation of the inside tank 12, and therefore a structure for fixing the flow distribution plate 40 can be formed without increasing the number of manufacturing steps.

Moreover, the flow distribution plate 40 is formed from a material that is electrically more basic than the material constituting the nearby inside tank 12, and therefore the flow distribution plate 40 serves as a sacrificial member, whereby corrosion of the inside tank 12 can be prevented.

Furthermore, by bending the outer edge of the flow distribution plate 40 to avoid edge contact, a reduction in the durability of the inside tank 12 can be prevented. By means of these constructions, movement of the flow distribution plate 40 can be restricted reliably using a simple constitution, and the manufacturing cost of the heat accumulator 10 can be reduced.

Second Embodiment

Next, a second embodiment will be described.

In the first embodiment described above, two restricting members (the first restricting portion 12a and the second restricting portion 12b) are provided in the inside tank 12 to restrict vertical direction movement of the flow distribution plate 40. In the second embodiment, on the other hand, only one restricting member is provided in the inside tank 12, and movement of the flow distribution plate 40 toward the bottom side direction is restricted by the inlet pipe 20.

It should be noted that identical reference symbols have been allocated to constitutions that are identical to the first embodiment and description thereof has been omitted.

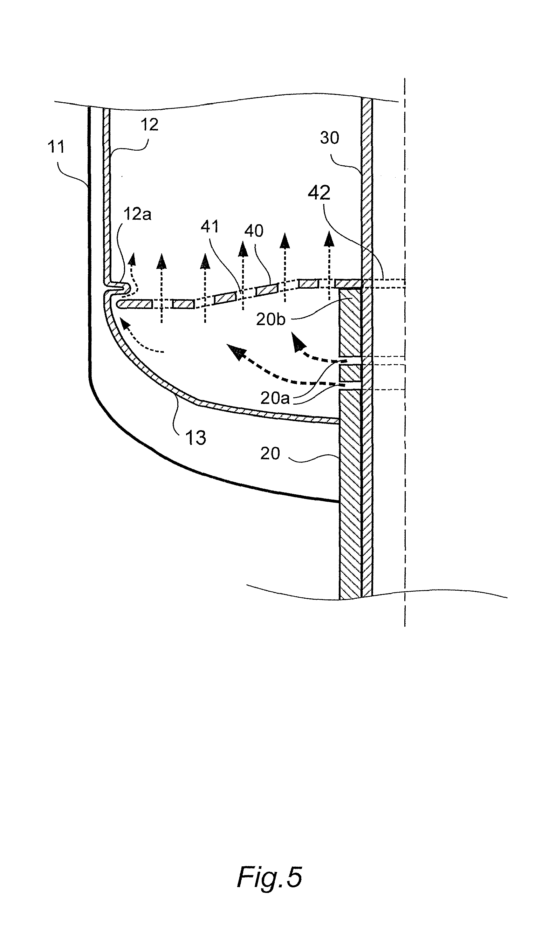

FIG. 5 is a sectional view showing the main parts of the heat accumulator 10 according to the second embodiment.

The first restricting portion 12a is formed in the inside tank 12 as described above. However, the second restricting portion 12b is not formed in the inside tank 12.

In the second embodiment, movement of the flow distribution plate 40 toward the bottom side is restricted by a holding portion 20b that serves as a second restricting portion projecting from the inlet pipe 20.

With this structure, the flow distribution plate 40 is held in a movement-restricted state in a predetermined position in the interior of the inside tank 12 while maintaining a constant interval with the inner wall of the inside tank 12.

As described above, when the interior of the heat accumulator 10 is not filled with the medium, the flow distribution plate 40 contacts the holding portion 20b on the bottom side due to gravity, but when the interior of the heat accumulator 10 is filled with the medium and the medium circulates, the flow of the medium causes the flow distribution plate 40 to float in a predetermined position in the interior of the heat accumulator 10 without contacting the inner wall of the inside tank 12, the first restricting portion 12a, and the holding portion 20b.

To prevent crevice corrosion, a location in which the holding portion 20b opposes the flow distribution plate 40 may be structured such that line contact or point contact occurs between the two components rather than surface contact.

Next, a method of manufacturing the heat accumulator 10 according to the second embodiment will be described.

First, the inside tank 12 is prepared with the bottom side unformed. The first restricting portion 12a is then formed in the required location of the inside tank 12 by drawing or the like, for example (first step).

Next, the flow distribution plate 40 formed in advance with the flow holes 41 and so on is inserted into the inside tank 12 (second step).

Next, the lid portion 13 is joined to the bottom side of the inside tank 12 by means such as welding.

At this time, a structure corresponding to the lid portion 13 may be formed by deforming the inside tank 12 through drawing. In the second embodiment, a restricting member is not provided in the bottom side direction of the flow distribution plate 40, and therefore a structure corresponding to the lid portion 13 may be formed by drawing (third step).

Next, the outside tank 11 is formed.

The outside tank 11 is prepared similarly to the inside tank 12, i.e. with the bottom side unformed, for example. The inside tank 12 is then inserted into the outside tank 11, whereupon the bottom side of the outside tank 11 is formed.

The bottom side of the outside tank 11 is partially joined to the lid portion 13 of the inside tank 12. As a result, an airtight space is formed between the outside tank 11 and the inside tank 12. The structure on the bottom side of the outside tank 11 may be formed by drawing or the like.

Air is then suctioned from the interior by a pump or the like so that the space between the outside tank 11 and the inside tank 12 is substantially a vacuum. At this time, for example, a valve may be provided in advance on the outside tank 11, and the valve may be closed when suction by the pump is complete (fourth step).

Next, the inlet pipe 20 and outlet pipe 30 are inserted into the opening part on the bottom side of the heat accumulator 10.

At this time, the outlet pipe 30 penetrates the through hole 42 in the flow distribution plate 40, whereby the flow distribution plate 40 is positioned in the diametrical direction.

Further, the holding portion 20b of the inlet pipe 20 supports the flow distribution plate 40 from the bottom side such that movement of the flow distribution plate 40 toward the bottom side is restricted (fifth step).

Through the steps described above, the heat accumulator 10 is manufactured.

The heat accumulator 10 according to the second embodiment, constituted as described above, exhibits similar effects to the first embodiment.

Moreover, in the second embodiment, the second restricting portion serving as a restricting member on the bottom side of the flow distribution plate 40 is constituted by the holding portion 20b projecting from the inlet pipe 20. Hence, only one restricting member need be formed on the inside tank, and therefore processing costs can be suppressed.

Further, the holding portion 20b is formed integrally with the outlet pipe 30, which is a resin pipe, and therefore the shape freedom of the inside tank 12 and flow distribution plate 40 can be improved and design modifications can be responded to flexibly, enabling a reduction in manufacturing cost.

As shown in FIG. 5, movement of the flow distribution plate 40 toward the bottom surface side can be restricted from an inner peripheral side even when the flow distribution plate 40 has a slightly curved surface rather than a substantially planar shape.

In the second embodiment shown in FIG. 5, the inside tank 12 and the lid portion 13 may be joined as shown in FIG. 1, 2, 3 or 4 of the first embodiment.

Further, as described above in the first embodiment, the flow distribution plate 40 can be caused to function as a sacrificial member by forming the flow distribution plate 40 from an electrically basic material or implementing plating on the surface thereof using an electrically basic material.

Furthermore, edge contact can be avoided by bending the outer edge of the flow distribution plate 40 as shown in FIG. 4 of the first embodiment.

This application claims priority based on Japanese Patent Application No.2008-236208, filed with the Japan Patent Office on September 16, 2008, the entire content of which is incorporated into this specification by reference.

Although the invention has been described above by reference to a certain embodiment of the invention, the invention is not limited to the embodiment described above. Modifications and variations of the embodiments described above will occur to those skilled in the art, in the light of the above teachings. The scope of the invention is defined with reference to the following claims.

## Claims

1. A heat accumulator comprising:
a storage portion (10) that has a thermal insulation structure and stores a medium in an interior thereof;
a medium inlet portion (20) having a medium introduction portion (20a) that introduces the medium into the storage portion (10);
a medium outlet portion (30) having a medium discharge portion (30a) that discharges the medium from the storage portion (10); and
a flow distribution portion (40) that is provided between the medium introduction portion (20a) and the medium discharge portion (30a) and makes a flow of the introduced medium substantially even in a diametrical direction of the storage portion (10),
wherein the storage portion (10) comprises a restricting member (12a, 12b, 20b) that restricts movement of the flow distribution portion (40) in a flow direction of the medium, and a predetermined interval is provided between the flow distribution portion (40) and an inner wall of the storage portion (10).

2. The heat accumulator as defined in Claim 1, wherein the restricting member (12a, 12b) restricts movement in the flow direction of the medium from an outer peripheral side of the flow distribution portion (40).

3. The heat accumulator as defined in Claim 1, wherein the restricting member (12a, 20b) restricts movement in the flow direction of the medium from an outer peripheral side and an inner peripheral side of the flow distribution portion (40).

4. The heat accumulator as defined in Claim 1, wherein the restricting member (12a, 12b) is constituted by a first restricting portion (12a) that projects toward an inner side of the storage portion (10) on a medium flow direction downstream side of the flow distribution portion (40), and a second restricting portion (12b) that projects toward the inner side of the storage portion (10) on a medium flow direction upstream side of the flow distribution portion (40).

5. The heat accumulator as defined in Claim 1, wherein the restricting member (12a, 12b) is constituted by a first restricting portion (12a) that projects toward an inner side of the storage portion (10) on a medium flow direction downstream side of the flow distribution portion (40), and a second restricting portion (20b) that projects from the medium inlet portion (20) on a medium flow direction upstream side of the flow distribution portion (40).

6. The heat accumulator as defined in any one of Claim 1 to Claim 5, wherein the flow distribution portion (40) is formed from a material that is electrically more basic than the storage portion (10).

7. The heat accumulator as defined in any one of Claim 1 to Claim 5, wherein the flow distribution portion (40) is plated with a material that is electrically more basic than the storage portion (10).

8. The heat accumulator as defined in any one of Claim 1 to Claim 7, wherein a part of the flow distribution portion (40) close to the restricting member (12a, 12b) has a curved surface.

9. A manufacturing method for a heat accumulator constituted by a storage portion (10) that has a thermal insulation structure and stores a medium in an interior thereof, comprising:
a first step of forming a first restricting portion (12a) that projects from an inner wall of a bowl-shaped inside tank (12);
a second step of inserting a flow distribution portion (40) into the inside tank (12);
a third step of joining a lid portion (13) formed with a second restricting portion (12b) to a bottom side of the inside tank (12);
a fourth step of accommodating the inside tank (12) in an outside tank (11) and substantially creating a vacuum in an interval between the inside tank (12) and the outside tank (11); and
a fifth step of fitting a medium inlet portion (20) and a medium outlet portion (30) into the inside tank (12).

10. A manufacturing method for a heat accumulator constituted by a storage portion (10) that has a thermal insulation structure and stores a medium in an interior thereof, comprising:
a first step of forming a first restricting portion (12a) that projects from an inner wall of a bowl-shaped inside tank (12);
a second step of inserting a flow distribution portion (40) into the inside tank (12);
a third step of forming a bottom on the inside tank (12);
a fourth step of accommodating the inside tank (12) in an outside tank (11) and substantially creating a vacuum in an interval between the inside tank (12) and the outside tank (11); and
a fifth step of fitting a medium inlet portion (20) provided with a second restricting portion (20b) and a medium outlet portion (30) into the inside tank (12).
